# EUROPEAN PATENT APPLICATION

(11) **EP 3 223 231 A1**
(43) Date of publication of application: **27.09.2017**
(21) Application number: 15861858.7
(22) Date of filing: 05.06.2015
(51) Int. Cl.: G06Q 50/30

(54) **MOBILE SELF-SERVICE SYSTEM AND METHOD**

(30) Priority: 17.11.2014 CN 201410653839
(71) Applicant: Chigoo Interactive Technology Co., Ltd., Xinwu District Wuxi Jiangsu 214028 (CN)
(72) Inventor: CHEN, Tao, Wuxi, Jiangsu 214028 (CN); WANG, Xinheng, Wuxi, Jiangsu 214028 (CN); ZHENG, Chengming, Wuxi, Jiangsu 214028 (CN); PAN, Chuanrong, Wuxi, Jiangsu 214028 (CN); LAN, Weijian, Wuxi, Jiangsu 214028 (CN); ZHOU, Hua, Wuxi, Jiangsu 214028 (CN)
(74) Representative: Hautier IP
(86) International application number: PCT/CN2015/080862
(87) International publication number: WO 2016/078395

(57) **Abstract**

Disclosed is a mobile self-service method and a system including a movable service terminal configured to acquire, verify and parse user data to obtain flight number information about a user; a background service system configured to interact with the movable service terminal and provide service data in response to a request sent from the movable service terminal. The terminal is further configured to interact with the background service system to verify the flight number information, confirm a corresponding flight, establish real-time indoor positioning information about the movable service terminal, and provide a prompt for navigation from the current position to a corresponding boarding gate or a specified position according to the service data and the real-time positioning information. The present invention can provide personalized flight information, positioning and navigation prompts to passengers waiting for flights in airports, provide path planning and estimate the required time.

## Description

### TECHNICAL FIELD

The present invention relates to self-service systems and methods adopting a wireless sensor network, and in particular to a self-service system and method in a public place such as airport waiting hall.

### BACKGROUND

Currently, airport waiting halls (or terminal buildings) provide flight information to passengers mainly by displaying flight information such as flight number, airline, departure, stop, destination, scheduled departure time and so on on bulletin boards in a rolling manner and pushing flight information with the aid of broadcast. With the dramatic increasing of airline passengers, the airport terminal buildings also gradually expand in number and volume, and the defects of such information prompt method increasingly appears. First, due to limitation to the number and installation location of bulletin boards and broadcast, passengers may have a relatively high possibility to miss or wrongly identify relevant announcement and broadcast information, and thus may not acquire the instant flight information about the airport accurately in a timely manner. Second, announcements and broadcast as a method of unidirectional and one-to-many dissemination, are lack of pertinence, convenience and interactiveness. Third, even if the passenger has acquired flight information, it is not easy to make a proper schedule and arrive at an exact boarding gate. The above problems cause poor experience of waiting for boarding and even disputes between passengers and the airport.

### SUMMARY

In view of the defects in the prior art, in one aspect, the present invention provides a mobile self-service system and method which can be applied to a public place including a plurality of movable service terminals and a background service system capable of interacting with the movable service terminals, such as an airport waiting hall. The background service system may provide information resources related to flight services.

A mobile self-service system is provided according to one aspect of the present invention, including: a movable service terminal configured to acquire, verify and parse user data to obtain flight number information about a user; a background service system configured to interact with the movable service terminal and provide service data in response to a request sent from the movable service terminal. The movable service terminal may be further configured to interact with the background service system to verify the flight number information about the user, confirm a corresponding flight, establish real-time indoor positioning information about the movable service terminal, and provide a prompt for navigation from the current position of the movable service terminal to a corresponding flight boarding gate or a specified position according to the user data and the real-time positioning information.

In some embodiments, the movable service terminal may further include a navigation unit configured to determine the current position of the movable service terminal and a path length D from the movable service terminal to the boarding gate according to the boarding gate information about the flight by means of a pre-laid indoor positioning network and a terminal building map stored in the movable service terminal and estimate a movement time T according to a speed V measured by a speed sensor carried by the movable service terminal.

In some embodiments, the background service system may include a first server configured to verify the user data of the movable terminal and parse the same to obtain flight number information about the user and verify the flight number information to provide corresponding basic flight information and flight information; a second server configured to provide information associated with departure, stop and destination; and a third server configured to provide terminal building map and position information.

In some embodiments, the interface unit may include a first interface configured to receive the basic flight information and flight information provided by the first server; a second interface configured to receive the information associated with departure or stop or destination provided by the second server; and a third interface configured to receive the terminal building map and position information provided by the third server.

It should be noted that the above servers and interfaces are defined by function and the practical application is not limited to three discrete servers and these functions may be integrated in one server or more kinds of servers may be provided according to different designs.

A mobile self-service method is provided according to another aspect of the present invention, including: A) verifying and parsing user data acquired by a movable service terminal to obtain flight number information and a corresponding flight of a user; B) acquiring service data by the movable service terminal through interaction with a background service system; and C) establishing by the movable service terminal its real-time indoor positioning information and providing a navigation prompt by means of at least one path from the current position of the movable service terminal to a corresponding flight boarding gate or a specified position according to the user data and the real-time positioning information.

It should be noted that numbering with A), B) and C) is used in the following description for convenience only and is not intended to define a special sequence. For example, the content of step B) may be processed before the content of step A) since the service data may be obtained by the movable service terminal from the background service system without identification of a user identity.

The above method of acquiring flight number information through verifying user data to confirm a flight corresponding to the user of the movable service terminal and providing corresponding information to the user of the movable service terminal according to the flight makes the provision of flight information more precise than the information announcement method in the prior art and makes waiting, boarding or transfer of the passenger at the terminal building more convenient. The user may also acquire personalized service data and the quality of service of the airport may be improved. In addition, positioning of the passenger in real time and providing a walk path from the positioned location to the boarding gate greatly facilitates the time and path schedule of the user waiting in the terminal building and may reduce the risk of missing the flight.

In some embodiments, before step A), an inquiry operation may be provided directly by means of a menu on the movable service terminal to acquire channel information, and the channel information may include flight ticket, car rental, hotel, resort, weather and time, news, film and television, book, finance, game and/or sports information. This provides users with information query and entertainment functions and improves convenience and interesting experience.

In some embodiments, the user data acquired by the movable service terminal may include flight number, user identity information and average movement speed. The flight number and user identity information are acquired by scanning a boarding check or identity certificate or recognizing a fingerprint, human face, retina or manually inputting the flight number, and the average movement speed is obtained after the speed acquired from the speed sensor is processed. By means of the above various access methods, the user can access the background service system more conveniently and rapidly.

In some embodiments, the interface unit of the movable service terminal may include a plurality of interfaces and be connected to a first server of the background service system via a first interface to acquire basic flight information and flight information. The basic flight information may include flight number, airline logo, departure/stop/destination and scheduled take-off time. The flight information may include valid flight information and invalid flight information. The valid flight information may include boarding gate, boarding time, delay time, takeoff time, changing boarding gate and seat number information about a specific flight in states of normal, boarding, immediately boarding, delayed and so on. The invalid flight information may include cancelled, boarding over, already taken off, no flight and network interrupt information. These personalized information prompts can make a user learn the states of the concerned flights and relevant prompts rapidly, which improves the flight experience of the user.

In some embodiments, the movable service terminal may be connected to a second server of the background service system via a second interface to acquire information associated with departure/stop/destination. The associated information may include weather, time, resort and car rental information.

In some embodiments, performing a navigation prompt in step C may include determining the current position of the movable service terminal and providing a navigation from the movable service terminal to a predetermined boarding gate according to the predetermined boarding gate information included in the flight information and a terminal building map stored in the mobile terminal or obtained from a third server via a third interface. With the guidance of the determined path, the walk time of a passenger is reduced, which provides a basis for the passenger to rationally allocate time for leisure, shopping, work and boarding. All these provide pleasant and comfortable waiting and traveling experience to the passenger.

In some embodiments, the method may further include estimating a movement time from the movable service terminal to the boarding gate and sending out a prompt from the movable service terminal. The above prompt may include voice prompt and flashing prompt so that the passenger will not be liable to miss the flight boarding time.

In some embodiments, estimating the time T may include determining a path length D from the movable service terminal to the boarding gate and the speed V acquired from the speed sensor carried by the movable service terminal according to the map and indoor positioning network to obtain the estimated time T. The above time estimation provides a basis for the passenger to rationally allocate time for leisure, shopping, work and boarding and thus pleasant and comfortable waiting and traveling experience can be provided to the passenger.

Compared with the prior art, the system and method in the present invention have the following advantages:
1) By installing a service terminal on a movable object (such as a multimedia trolley) in an airport, a passenger can interact with a background service system through the movable service terminal to acquire service data while walking;
2) By acquiring flight number information about the passenger, the passenger is provided with one-to-one personalized flight information prompts, and by positioning the passenger in real time in the airport and providing at least one path from the positioning location to a boarding gate for the passenger to reference, those passengers who are not familiar with the airport environment can easily find the boarding gate; and
3) If the passenger selects a certain walk path, the system may also evaluate the distance and an approximate movement time from the positioning location of the passenger, i.e., the movable service terminal, to the boarding gate or a specified location, and with the guidance of the determined path, the walk time of the passenger is reduced, which provides a basis for the passenger to rationally allocate time for leisure, shopping, work and boarding. All these provide pleasant and comfortable waiting and traveling experience to the passenger.

### BRIEF DESCRIPTION OF THE DRAWINGS

Fig. 1 is a schematic diagram of an airport mobile self-service system according to an embodiment of the present invention, showing the data interaction between a mobile service system and a background service system via an interface unit;
Fig. 2 is a flowchart of a method for providing self-service at a movable service terminal according to an embodiment of the present invention;
Fig. 3 is a schematic diagram of data interaction between a movable service terminal and a server according to an embodiment of the present invention;
Fig. 4 is a particular flowchart of a method for providing movable service terminal self-service according to an embodiment of the present invention;
Fig. 5 shows an interface diagram displayed by an airport movable service terminal showing that a flight is in a normal state according to an embodiment of the present invention;
Fig. 6 is a schematic diagram showing a movable service terminal in an airport which is making path planning and providing a navigation prompt according to an embodiment of the present invention; and
Fig. 7 is another schematic diagram showing a movable service terminal in an airport which is making path planning and providing a navigation prompt according to an embodiment of the present invention.

### DETAILED DESCRIPTION

Hereinafter, embodiments of the present invention will be described in conjunction with the accompanying drawings.

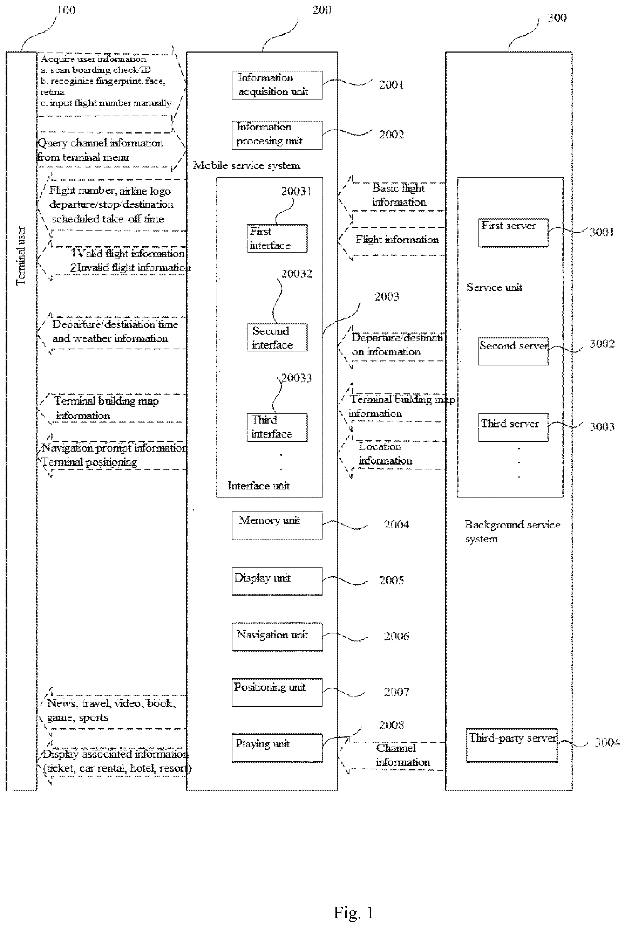

Fig. 1 is a schematic diagram of an airport mobile self-service system according to an embodiment of the present invention, showing data interaction between a mobile service system and a background service system via an interface unit. In this embodiment, the movable service terminal may be a multimedia player installed on an airport trolley which has a wireless transceiver function, may interact with wireless transceiver points of the airport by way of wireless signal transmission, and may establish data connections with the background service system of the airport to interact with a server of the background service system through the wireless transceiver points of the airport. As shown in Fig. 1, the system includes a plurality of movable service terminals 200 and a background service system 300.

The movable service terminal 200 is configured to request the background service system 300 for accessing service data, make a flight confirmation after the verification is passed, receive and display service data information and guide the user of the terminal to a boarding gate through a navigation unit 2006.

The mobile service system 200 may include an information acquisition unit 2001, an information processing unit 2002, an interface unit 2003, a memory unit 2004, a display unit 2005, the navigation unit 2006, a positioning unit 2007 and a playing unit 2008.

The information acquisition unit 2001 includes a camera configured to photograph a certificate or boarding check and so on of a passenger. Optionally, the information acquisition unit 2001 may further include a scanning device (such as 2D bar code scanning device) configured to scan a user's certificate or boarding check and so on to acquire user identity information and corresponding flight information. The information acquisition unit may further include a manual input device configured for a passenger to input relevant information, such as user identity number or passport number, flight number and so on.

The information processing unit 2002 is configured to process the data received by the background service system to obtain data information satisfying user demand.

The interface unit 2003 may include a first interface 20031, a second interface 20032 and a third interface 20033 which are respectively configured to provide an interface through which the movable service terminal performs data interaction with a plurality of functional modules (for example implemented as a plurality of servers) of the background service system. The first interface 20031 is configured to receive basic flight information and flight information provided by a first server; the second interface 20032 is configured to receive information associated with departure, stop and destination provided by a second server; and the third interface 20033 is configured to receive terminal building map information and position information provided by a third server.

The memory unit 2004 is configured to store system software, application software and service data information.

The display unit 2005 is configured to display the data processed by the processing unit to the user of the terminal.

The navigation unit 2006 is configured to perform the above guiding procedure and provide a prompt on navigation from the current position of the movable service terminal to a flight boarding gate corresponding to the flight data or a specified position to the passenger.

The positioning unit 2007 is configured to interact with the background service system through the positioning method stored in the positioning module using positioning methods developed by the applicant earlier such as a patented RFID/IRID positioning method (entitled "ID identification device and identification method and use method thereof', patent No. 200810027308.X) and a patented geomagnetic positioning method (entitled "Target positioning method and system", patent application No. 201310350209.6), establish indoor positioning or make mapping while positioning which adopts the technical solutions disclosed in patent applications filed by the applicant earlier, such as an application entitled "Instant target positioning and mapping method and system" (patent application No. 201410277471.7), the entirety of which is incorporated here by reference.

The playing unit 2008 is configured to play the flight information obtained by the movable service terminal from the background service system 300.

The background service system 300 verifies the service data requested for access by the movable service terminal 200 and confirms the flight and then provides the service data.

The first server 3001 verifies the flight according to the data input from the terminal and confirms the flight after the verification is passed and then provides basic flight information and flight information.

The second server 3002 is configured to provide departure and destination information to the movable service terminal 200 via the second interface 20032.

The third server 3003 is configured to provide terminal building map information and position information to the movable service terminal 200.

A third-party server 3004 is configured to provide real-time network information (such as weather information) to the movable service terminal. Herein, the network may be one of the following three networks: telecommunication network, cable television network, computer network, and the real-time network information may be real-time news, travel, film and television, book, game, sports and so on.

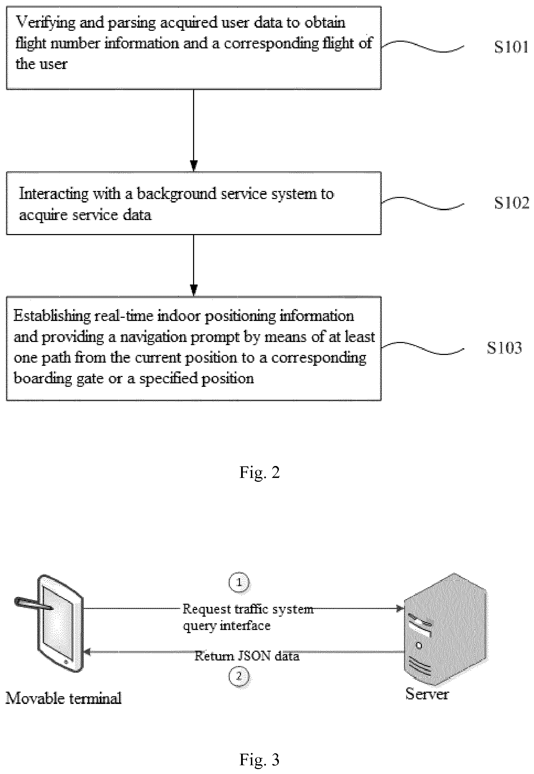

Fig. 2 is a flowchart of a method for providing movable service terminal self-service according to an embodiment of the present invention. As shown in Fig. 2, the method may include the following steps.

S101: User data acquired by a movable service terminal is verified and parsed to obtain flight number information and a corresponding flight of a user.

If a passenger operates a movable service terminal in an airport to obtain relevant services, channel information can be acquired without verifying identity, such as flight ticket, car rental, hotel, resort, weather and time, news, film and television, book, finance, game, sports and so on. In addition, information about the terminal user may also be acquired by scanning a boarding check, identity card or recognizing a fingerprint, human face, retina and so on. The processing unit converts the acquired terminal user information into boarding check information and then requests to acquire flight information and information associated with departure/stop/destination from the background service system.

S102: The movable service terminal interacts with the background service system to acquire service data.

The service data which may be acquired before flight verification and confirmation may include:

basic flight information, such as flight number, airline logo, departure/stop/destination and scheduled take-off time;

flight information, including valid flight information (boarding gate, boarding time, delay time, takeoff time, changing boarding gate and seat number information about a specific flight in states of normal, boarding, immediately boarding, delayed and so on) and invalid flight information (cancelled, boarding over, already taken off, no flight and network interrupt and so on);

information associated with departure/stop/destination, including relevant information about the destination of the passenger (weather, time, resort, car rental and so on), which requires a user to select a specific place and then can be acquired from a third-party service provider; and

channel information, including: flight ticket, car rental, hotel, resort, weather and time, news, film and television, book, finance, game, sports and so on, which requires the user to select a specific place and then can be acquired from a third-party service provider.

There may be two methods to acquire the service data. One method is that the third-party service provider implants an application for providing service data into the system in the present invention according to the data format and protocol requirements of the system in the present invention. Another method is that the system in the present invention provides an interface to a third-party server, processes a local request according to the requirements of the third-party server and converts the service data provided by the third-party server to the data format of the background server or the movable service terminal of the system in the present invention for presenting to the user.

In the case where the service data acquired after flight verification and confirmation may merely include basic flight information and flight information about the confirmed flight, other information such as information associated with departure/stop/destination and channel information may also be acquired from the link of the third-party server after the user selects a destination.

In this embodiment, the movable service terminal exchanges information with several background servers via several predetermined interfaces.

Preferably, the movable service terminal in this example is connected to a first server via a first interface to acquire basic flight information and flight information.

The movable service terminal is connected to a second server via a second interface to acquire information associated with departure/stop/destination.

The interface configuration in this embodiment will be described by taking the configuration of the first interface as an example.

A web application is deployed on a server (the first server) provided in the airport to generate a link address of an application service provider to be accessed (for example, accessing through a browser, such as accessing http://www.google.com through an IE browser, then this application generates an address similar to the URL of Google) to provide external access (Java language may be adopted to compile) and to develop an API interface. The flight information query interface is the first interface. The terminal accesses the URL address of the first interface to acquire information by means of HTTP protocol.

For example, to query flights from Guangzhou to Beijing by URL:http://localhost/flight/api/flightinfo?scity=Guangzhou&ecity=Beijing
URL returns the following contents:

```
 {
    "result" : 1000,
    "msg" : "return success",
    "fs":[{
        "flightCom" : "China United Airlines",
        "flightNo" : "KN5890",
        "flightdate":"2014-11-06 20:55",
        "ecity":"Beijing Nanyuan airport"
    },{
        "flightCom" : "China Eastern Airlines",
        "flightNo" : "MU3726",
        "flightdate":"2014-11-06 11:15 AM",
        "ecity":"Beijing Nanyuan airport"
    },{
        "flightCom" : "China Hainan Airlines",
        "flightNo" : "HU7810",
        "flightdate":"2014-11-06 9:45 PM",
        "ecity":"Capital Beijing"
    }]
 }
```

It should be noted that the background service system in the present invention not only provides airport information but may also provide other information relevant to the airport, such as airport weather, traffic from the airport to the downtown and so on. Fig. 3 is a schematic diagram of the data interaction between a movable service terminal and a server according to an embodiment of the present invention. As shown in Fig. 3, the movable service terminal sends a request for a traffic system query interface to the server, and the server processes the request and converts same to data that can be recognized by the terminal by means of JSON data format to display on the terminal in different forms. This data is provided by a third party, such as a network or a dedicated channel opened on a server by a third party. In order to describe the above data interaction in detail, hereinafter, a passenger selecting the best path to a certain hotel in the downtown will be used as an example.

The destination of a passenger is Beijing and he needs to query the path from Beijing airport to a certain hotel. A path list from Beijing airport to this hotel with a ranking order from closest to furthest can be acquired via the traffic system interface and facilitate the passenger himself to view and select. The movable service terminal accesses the traffic system query interface through the background service system, the interface address being "http://localhost/trafficsys/getWays", to query the server in the background service system. The server queries its internal database or a third party to acquire real-time network information, returns a query result to the movable service terminal by using JSON language. The query result can be parsed at the movable service terminal (converting JSON data to Java objects for the terminal program to use). Then, the queried path information is displayed to the passenger on the user interface of the display unit for the user to acquire information.

The movable service terminal provides three paths, the distance of each path and the required time of each path to the passenger for selection. The distance of the first path is 12 km and the required time is 13 min; the distance of the second path is 8 km and the required time is 18 min; and the distance of the third path is 10 km and the required time is 15 min. Some program codes for implementing the query function are as follows:

```
1. send a request to the server
 a) parameters:
 i. departure: Beijing Airport
 ii. destination: Capital Hotel
 b) interface address: http://localhost/trafficsys/getWays
 2. return JSON data
 [{
    "distance" : 12, //distance
    "time" : 13, // time
    "orderNo" : 1 //sort number of paths
 },{
    "distance" : 10,
    "time" : 15,
    "orderNo" : 3
 },{
    "distance" : 8,
    "time" : 18,
    "orderNo" : 2
 3. }]
```

Step S103: The movable service terminal establishes real-time indoor positioning information and provides a navigation prompt by means of at least one path from the current position of the movable service terminal to a corresponding flight boarding gate or a specified position according to the user data and the real-time positioning information.

The movable service terminal determines the current position thereof and provides a navigation from the movable service terminal to the boarding gate by interacting with a plurality of positioning nodes included in the indoor positioning network according to a terminal building map and location information stored in the memory unit in the movable terminal or obtained from the third server via the third interface. The navigation prompt includes displaying a corresponding path on the terminal or prompting the travel direction through voice. The configuration and positioning method for an indoor positioning network may be implemented by using conventional means, such as the solution disclosed in Chinese patent application No. 201310350209.6 entitled "Target positioning method and system" and the solution disclosed in Chinese Patent Application No. 201410277471.7 entitled "Instant target positioning method and mapping method and system", the entirety of which is incorporated here by reference.
The above may be that the movable service terminal positions the user in real time and provides a navigation prompt. In addition, it may also be possible to estimate a movement time from the movable service terminal to the boarding gate and then sending out a prompt on the time through the movable service terminal.

The method for estimating a movement time T from the movable service terminal to the boarding gate is: T=D / V. Here D is a path length formed from the movable service terminal to the boarding gate according to the map and the indoor positioning network and V is a calculated average of the speed measured by the speed sensor of the movable service terminal.

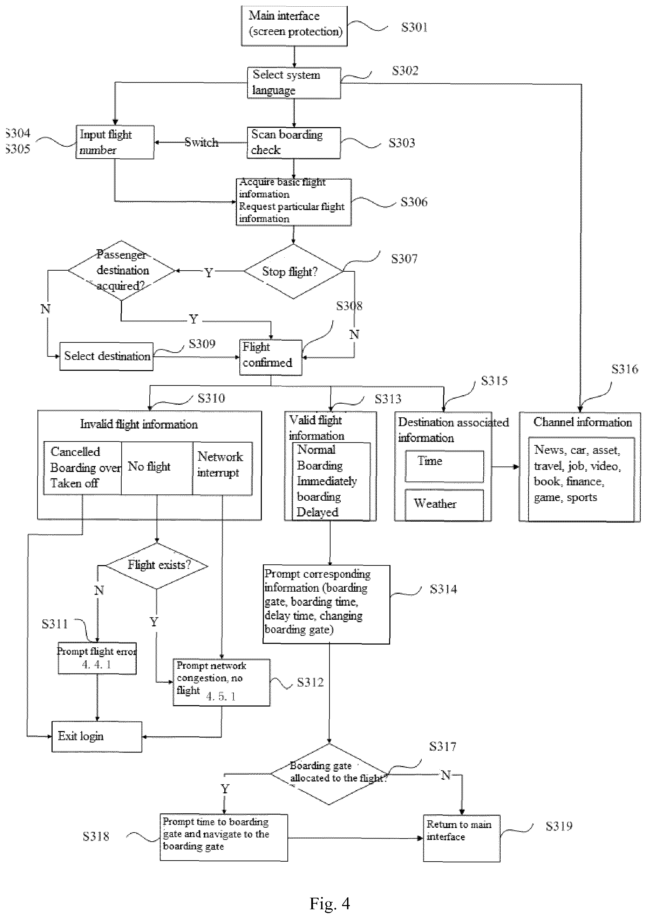

Fig. 4 is a specific flowchart of a method for providing movable service terminal self-service according to an embodiment of the present invention. As shown in Fig. 4, the movable service terminal is in a standby state if not in use (S301). A display screen protection picture may be displayed on the interface and any region on the screen can be touched or the switch can be turned on to enter into a use state.

After the user turns on the movable service terminal to enter into a use state, the user may select a language environment (S302). The system automatically switches between different language systems such as Chinese or English according to the selection, and for Chinese, a switch may also be conducted between simplified Chinese and traditional Chinese.

A camera on the movable service terminal photographs or a scanning device scans a 2D code/barcode on a boarding check or scans an identity card to acquire user identity information (S303). Or, user identity information may also be obtained by recognizing a fingerprint, human face, retina and so on. If user identity or boarding check information still cannot be acquired after a preset number of scans (such as 3 scans), the system automatically switches to manually input the flight number or identity card number (S304) and acquires information about the terminal user by inputting the flight number on the boarding check or the identity card number by means of keyboard input method, and thus the acquisition of terminal user information can be done by directly inputting the flight number.

The basic flight information may be obtained according to the acquired user information. In particular, the acquired user information is sent to the first server of the background server system via the first interface in a wireless communication manner. The first server looks up the internal database thereof according to the flight number to find the basic flight information and returns same to the movable service terminal via the first interface in a wireless communication manner(S306).

Since the same flight may include non-stop and stop, for example, MU2992 (Wuxi-Chongqing-Kunming) departing from Wuxi, the destination of some passengers is Chongqing and the destination of the rest passengers is Kunming. The destination has to be selected for data accuracy so that the flight can be confirmed. Therefore, the background service system also determines whether the flight is a stop flight (S307). If not, this flight can be confirmed directly (S308), and if yes, then the flight is confirmed after the destination is selected (S309). Then the flight information is output to the movable service terminal via the first interface in a wireless communication manner. If the displayed flight information is invalid flight information about "cancelled", "boarding over" and "already taken off' (S310), the login procedure exits.

If the flight information is "no flight exists", for example, due to schedule, some flights will not take off today or the mobile terminal inputs a Guangzhou flight in Beijing airport, then query cannot be done in the Beijing server and hence no flight will be prompted if such wrong information is input. At this moment, the background service system is accessed to determine whether "no flight exists" is due to a wrong flight number, if yes, then "flight error" will be prompted (S311) and if it is detected that the flight information is "network interrupt", then "network congestion, no flight information" will be prompted (S312) and then the login procedure will exit. After the login procedure exits, the system may enter into a screen protection or channel information interaction state.

If the flight information is valid flight information, such as "normal", "boarding", "immediately boarding", "delayed" and so on (S313), the terminal user is prompted of the corresponding flight information (S314), such as "boarding gate", "boarding time", "delayed time", or "changing boarding gate".

The movable service terminal may also acquire information associated with departure/stop/destination from the second server via the second interface. The information associated with departure/stop/destination, such as time information, weather information and so on may be pushed corresponding to the destination. For example, weather information data may be acquired directly from the second server or the third-party server interface.

For example, the time information is pushed by programming an interface program interface URL: http://localhost/i3q_ weather/getWeather?City= Beijing in the second server. The processing method for this interface first searches in a local database to find out whether there is information about current weather of the queried city. If yes, then this information will be returned; and if not, weather information about the corresponding city is queried via the third-party server interface and then saved in the local database. The acquired data is transmitted through JSON.

Taking weather information push as an example. departure/stop/destination, and city code are acquired. Then, by requesting such as http://localhost/i3q_weather/getWeather?City=Beijing, the corresponding weather information can be acquired and the data is returned in JSON format. The movable service terminal opens the service program, acquires the request every 2 hours (this time can be particularly configured), acquires the latest data via the interface, and then notifies the display interface (UI) of the terminal to display the weather information. The above interface is provided by a third party, some are free and some are charged. In this example, in order to provide stable service, a charging third-party weather interface is provided. The weather information provided by the third-party server is imported into the second server and issued to the terminal via this interface. If the third-party weather interface needs to be changed, it merely requires to reprogram the import program and the terminal access need not to be modified.

For an international flight, the current time of the departure/stop/destination may also be pushed at the same time according to the time zone where the destination is located.

In addition, real-time network information may also be provided by the third-party to the movable service terminal (S316). The real-time network information may be real-time news, travel, film and television, book, game, sports and so on. Herein, the network may be telecommunication network or cable television network or Internet and so on. To this end, a third-party interface may be configured for the movable service terminal to interact with the third-party server through the background service system and corresponding data or service can be obtained.

It is determined whether the queried flight has been allocated a boarding gate (S317). If the boarding gate has been allocated, then a navigation path from the current position of the movable service terminal to the boarding gate is determined and the length of this path is determined to estimate the time required to arrive at the boarding gate and guide the passenger to use the navigation function to navigate to the boarding gate (S318) according to the boarding gate information about the flight through a pre-laid indoor positioning navigation network, such as the patented RFID/IRID positioning method developed by the applicant earlier (Chinese patent No. 200810027308.X entitled "ID identification device and identification method and use method thereof', the entire of which is incorporated by reference) and patented geomagnetic positioning method (Chinese patent No. 201310350209.6 entitled "Target positioning method and system") and the terminal building map stored in the terminal.

The path is determined through a positioning method. For example, if an RFID/IRID positioning network is adopted, a large number of RFID/IRID nodes will be laid in the airport. During laying, the position of each node is labeled, and then the distance therebetween is also determined. Thus, after the path is determined, the length of this path can be determined by calculating the number of nodes in the path according to the preset distance between various nodes. In addition, the path may also be calculated according to the constructed map of the terminal building.

The following example illustrates the guide method of the movable service terminal. The path planning from the current position to the boarding gate is calculated by means of map search according to the current position of the user and the determined boarding gate and the path planning is prompted to the user in a form of text or voice or images and so on. For example, a user needs to move ahead for a distance, turn left (or turn right) for a distance, and then move ahead for a distance to reach the boarding gate. The path may be determined using a conventional shortest path planning method (for example, implemented by an algorithm of searching for the shortest path based on map).

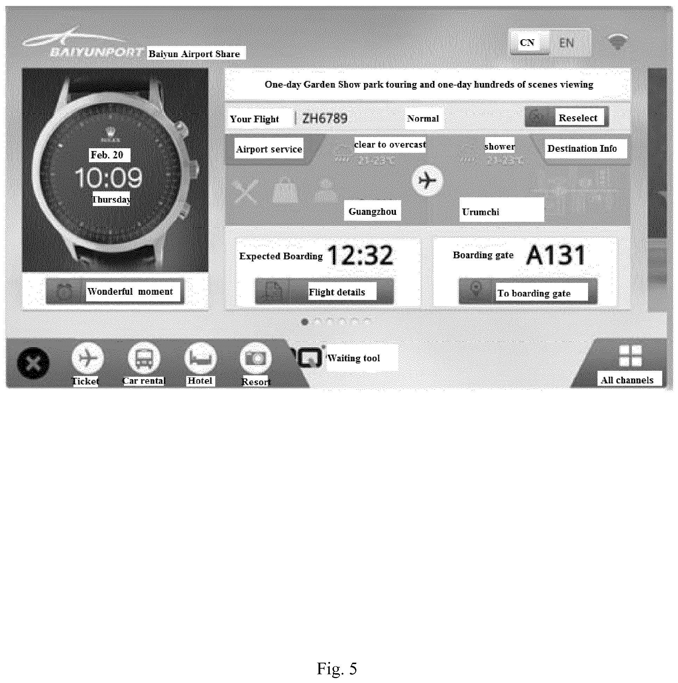

Fig. 5 is an interface diagram of flights displayed by an airport movable service terminal being in a normal state according to an embodiment of the present invention. Referring to Fig. 5, the state of the flight in a normal state is shown in the display screen which includes: system language: Chinese; flight number: ZH6789; flight state: normal; local weather: clear to overcast; destination weather: shower; estimated boarding time: 12:32; and boarding gate: A131. In addition, the display screen also displays flight details and menus navigated to boarding gate, airplane ticket, car rental, hotel, resort and so on.

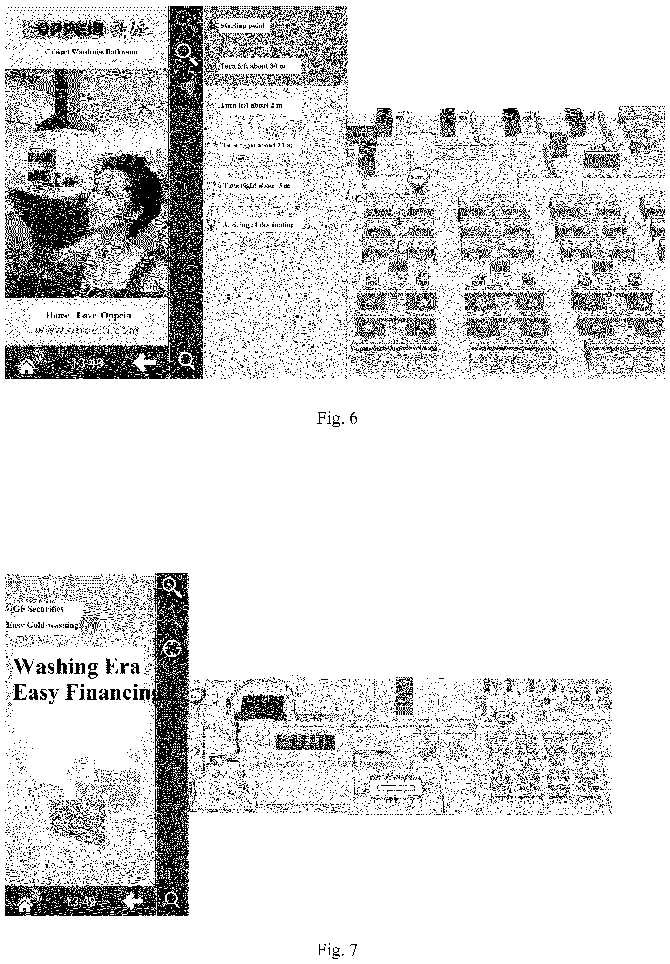

Figs. 6 and 7 are schematic diagrams showing a movable service terminal in an airport which is making path planning and providing a navigation prompt according to an embodiment of the present invention. Hereinafter, the movable service terminal prompting a passenger of the path from the VIP room of the airport to a boarding gate is taken as an example. After the path from the VIP room of the airport to the boarding gate is determined according to the above method, a perspective terminal building map is displayed on the movable service terminal to show the current position of the movable service terminal (labeled as "starting point") and prompt with text indicating to turn left for about 32 meters from the "starting point" location, then turn left for 2 meters, then turn right for about 11 meters, and then turn right for about 3 meters to finally reach the "ending point".

In addition, the navigation prompt may be updated continuously according to the instant indoor positioning of the movable service terminal. Or, the navigation prompt is updated every predetermined time. Each time the passenger reaches a new RFID/IRID node, the position thereof and the corresponding path will be re-determined. If the original path is not deviated (the node is still in the original path), then the above process will be repeated to relocation and the navigation prompt will be given according to the original path continuously. If the original path is deviated, then the path, distance and estimated time will be re-determined according to the above method and a new navigation prompt will be given, all of which are similar to the method of outdoor GPS navigation. A particular implementation may be adopting a method similar to the existing car navigation system.

The passenger will be prompted if it is determined that the movable service terminal used by the passenger has reached the boarding gate through the indoor positioning system and the navigation will terminate if the passenger inputs a confirmation instruction to the movable service terminal.

During navigation, if the wireless movable terminal deviates from the planned path, then the wireless movable terminal gives out a prompt and re-plans a new path according to the current position of the wireless movable terminal and the confirmed boarding gate and prompts the passenger.

The foregoing is merely some embodiments of the present invention. For a person skilled in the art, variations and modifications may be made without departing from the inventive concept of the present invention, and will fall into the protection scope of the present invention.

## Claims

1. A mobile self-service system, comprising:
a movable service terminal configured to acquire, verify and parse user data to obtain flight number information about a user; and
a background service system configured to interact with the movable service terminal and provide service data in response to a request sent from the movable service terminal;
wherein the movable service terminal is further configured to interact with the background service system to verify the flight number information, confirm a corresponding flight, establish real-time indoor positioning information about the movable service terminal, and provide a prompt for navigation from current position of the movable service terminal to a corresponding flight boarding gate or a specified position according to the service data and the real-time positioning information.

2. The system according to claim 1, wherein the movable service terminal includes an information acquisition unit, an information processing unit, an interface unit, a display unit, a navigation unit, a positioning unit and a playing unit, wherein
the information acquisition unit includes:
a camera configured to photograph a certificate or boarding check of a user, or
a scanning device configured to scan a certificate or boarding check of a user,
a speed sensor configured to acquire a movement speed of the movable service terminal, and
an information input device configured for allowing a user to input information;
the information processing unit is configured to process the data received from the background service system to obtain data information meeting the demand of the movable service terminal;
the interface unit is configured to provide an interface for the data interaction between the movable service terminal and the background service system;
the display unit is configured to display the data processed by the information processing unit to the movable service terminal;
the navigation unit is configured to provide a prompt for navigation from the current position of the movable service terminal to a flight boarding gate corresponding to the flight data or a specified position;
the positioning unit is configured to performing indoor positioning of the movable service terminal and/or performing mapping while positioning; and
the playing unit is configured to play the service data information and the navigation prompt information.

3. The system according to claim 2, wherein the navigation unit is configured to determine the current position of the movable service terminal and a path length D from the movable service terminal to the boarding gate according to the boarding gate information about the flight by means of a pre-laid indoor positioning network and a terminal building map stored in the movable service terminal and determine an estimated movement time T according to a speed V measured by the speed sensor carried by the movable service terminal.

4. The system according to claim 3, wherein the indoor positioning network includes a plurality of positioning nodes and the navigation unit of the movable service terminal is configured to interact with the positioning nodes to acquire the current position and determine a path from the movable service terminal to the boarding gate according to the terminal building map.

5. The system according to claim 2, wherein the background service system comprises:
a first server configured to verify the user data of the movable terminal and parse the same to obtain flight number information about the user and verify the flight number information to provide corresponding basic flight information and flight information;
a second server configured to provide information associated with departure, stop and destination; and
a third server configured to provide terminal building map information and position information.

6. The system according to claim 5, wherein the interface unit comprises:
a first interface configured to receive the basic flight information and flight information provided by the first server;
a second interface configured to receive the information associated with departure, stop and destination provided by the second server; and
a third interface configured to receive the terminal building map information and position information provided by the third server.

7. A mobile self-service method, comprising the steps of:
A) verifying and parsing user data acquired by a movable service terminal to obtain flight number information and a corresponding flight of a user;
B) acquiring service data by the movable service terminal through interaction with a background service system; and
C) establishing by the movable service terminal its real-time indoor positioning information, and providing a navigation prompt using at least one path from the current position of the movable service terminal to a corresponding flight boarding gate or a specified position according to the user data and the real-time positioning information.

8. The method according to claim 7, wherein before step A), the method further comprises: providing an inquiry operation service directly by means of a menu on the movable service terminal for the user to acquire channel information, the channel information comprising: flight ticket, car rental, hotel, resort, weather and time, news, film and television book, finance, game and/or sports information.

9. The method according to claim 7, wherein the user data includes the movement speed of the movable service terminal and the method comprises providing a navigation prompt to a user of the movable service terminal according to the movement speed and the moving path.

10. The method according to claim 9, wherein the user data acquired by the movable service terminal further includes a flight number and user identity information.

11. The method according to claim 10, wherein the movable service terminal is connected to a first server of the background service system via a first interface to acquire basic flight information and flight information, the basic flight information including flight number, airline logo, departure/stop/destination and scheduled take-off time; the flight information comprising: valid flight information and invalid flight information; the valid flight information comprising boarding gate, boarding time, delay time, takeoff time, changing boarding gate and seat number information about a specific flight in states of normal, boarding, immediately boarding, delayed and so on; and the invalid flight information comprising cancelled, boarding over, already taken off, no flight and network interrupt information.

12. The method according to any one of claims 7 to 11, wherein the movable service terminal is connected to a second server of the background service system via a second interface to acquire information associated with departure/stop/destination, which comprises weather, time, resort and car rental information.

13. The method according to claim 11, wherein said providing a navigation prompt in step C comprises:
determining the current position of the movable service terminal and providing a path indication from the movable service terminal to a predetermined boarding gate according to the boarding gate information included in the flight information and a terminal building map stored in the mobile terminal or obtained from a third server via a third interface.

14. The method according to claim 13, further comprising: estimating a movement time T from the movable service terminal to the boarding gate and sending out a prompt of the movement time T from the movable service terminal.

15. The method according to claim 14, wherein said estimating the movement time T comprises:
obtaining at least one walk path from the movable service terminal to the boarding gate according to the map and an indoor positioning network and determining a path length D of the walk path;
determining an average movement speed V according to the acquired movement speed of the movable service terminal; and
determining an estimated movement time T according to the path length D and the average movement speed V.
